# EUROPEAN PATENT SPECIFICATION

(11) **EP 3 061 336 B1**
(45) Date of publication and mention of the grant of the patent: **22.08.2018**
(21) Application number: 15197968.9
(22) Date of filing: 04.12.2015
(51) Int. Cl.: A01D 34/64, A01D 34/81, A01D 34/66

(54) **RIDING TYPE MOWING MACHINE**
AUFSITZRASENMÄHER
MACHINE À TONDRE DE TYPE À SELLE

(30) Priority: 27.02.2015 JP 2015038904
(43) Date of publication of application: 31.08.2016
(73) Proprietor: Iseki & Co., Ltd., Matsuyama-shi, Ehime 799-2692 (JP)
(72) Inventor: TODA, Hirotaka, Iyo-gun, Ehime 791-2193 (JP); OKAMOTO, Suguru, Iyo-gun, Ehime 791-2193 (JP); BABA, Yusuke, Iyo-gun, Ehime 791-2193 (JP)
(74) Representative: TBK

(56) References cited:
- EP-A1- 1 745 687
- EP-A2- 2 042 016
- JP-A- 2015 035 960
- US-A- 5 064 315
- US-A1- 2013 111 868
- US-A1- 2015 000 238

## Description

### [Technical Field]

The present invention relates to a riding type mowing machine according to the preamble of claim 1 in which a mowing device is mounted between front and rear wheels of a travelling vehicle.

### [Background Art]

Patent Document 1 discloses a riding type mowing machine in which a mowing device is mounted between front and rear wheels of a travelling vehicle.

Patent Document 2 shows a riding type mowing machine according to the preamble of claim 1.

### [Prior Art Documents]

### [Patent Documents]

[Patent Document 1] JP 2014 143991 A
[Patent Document 2] US 2013/111868 A1

### [Disclosure of the Invention]

### [Problem that the Invention is to Solve]

The object of the invention is to easily attach or detach a cover body covering a transmission mechanism and to cover the transmission mechanism in appropriate form.

### [Means for Solving the Problem]

The object is achieved by a riding type mowing machine having the combination of the features of claim 1. Further advantageous developments of the invention are set out in the dependent claim.

In order to attain the object by solving the above-described problem, according to the invention, provided is a riding type mowing machine including: a mowing device (4) that includes a plurality of blades (7) mowing grass, a mower deck (8) covering the blades (7), and a transmission mechanism rotating the blades (7), wherein the mowing device (4) is provided between a front wheel (2) and a rear wheel (3) of a travelling vehicle (1), wherein the transmission mechanism is provided above the mower deck (8), wherein a left cover body (12) covering the left side portion of the transmission mechanism and a right cover body (13) covering the right side portion of the transmission mechanism are provided, wherein a front portion of the mower deck (8) is provided with an eject guide body (22) forming an upper portion of an eject passage (37) from which grass mown by the blades (7) is ejected rightward, wherein the eject guide body (22) is formed in a posture inclined rightward and upwardly, wherein an upper surface of a rear portion of the left cover body (12) is formed as a flat surface and a left end portion (12a) and a rear end portion (12b) are respectively bent downwardly, wherein an upper surface of a rear portion of the right cover body (13) is formed as a flat surface and a right end portion (13d) and a rear end portion (13e) are respectively bent downwardly, and wherein a front portion of the left cover body (12) and a front portion of the right cover body (13) are detachably attached to the eject guide body (22) in a posture along an upper surface thereof.

Accordingly, it is possible to easily attach or detach the left cover body (12) and the right cover body (13). Further, it is possible to satisfactorily cover the transmission mechanism.

According to the invention, provided is the riding type mowing machine, wherein a center cover body (14, 15), which is formed in a flat surface, covering an upper side of the transmission mechanism is provided between the left cover body (12) and the right cover body (13), and wherein a front portion of the center cover body (14, 15) is detachably attached to the eject guide body (22) in a posture along the upper surface thereof.

Accordingly, it is possible to easily attach or detach the center cover body (14, 15).

Preferably provided is the riding type mowing machine, wherein the height of an upper surface of the center cover body (14, 15) is set to be lower than the height of the upper surfaces of the rear portions of the left cover body (12) and the right cover body (13).

Accordingly, it is possible that the mower deck hardly contacts the lower portion of the fuel tank or the mission casing provided in the lower portion of the travelling vehicle (1) when the reaping height of the mower deck (8) is increased to the highest position.

According to the invention, provided is the riding type mowing machine, wherein the thickness of the left cover body (12) and the right cover body (13) is set to be thicker than the thickness of the center cover body (14, 15).

Accordingly, it is possible to ensure the strength necessary when the front wheels (2) climb over the cover body. Further, since the center cover body (14, 15) is decreased in weight, it is possible to easily attach or detach the cover body.

### [Advantage of the Invention]

According to the invention, it is possible to easily attach or detach the cover body. Further, it is possible to satisfactorily cover the transmission mechanism. Further, the front wheels can easily climb over the cover body.

According to the invention, it is possible to ensure the strength necessary when the front wheels 2 climb the cover body. Further, since the center cover body is thinned, the cover body is decreased in weight and hence can be easily attached or detached. Further, since the transmission mechanism is covered, safety is ensured.

Further, the cover body can be easily attached or detached and the mower deck can have a satisfactory appearance.

### [Brief Description of the Drawings]

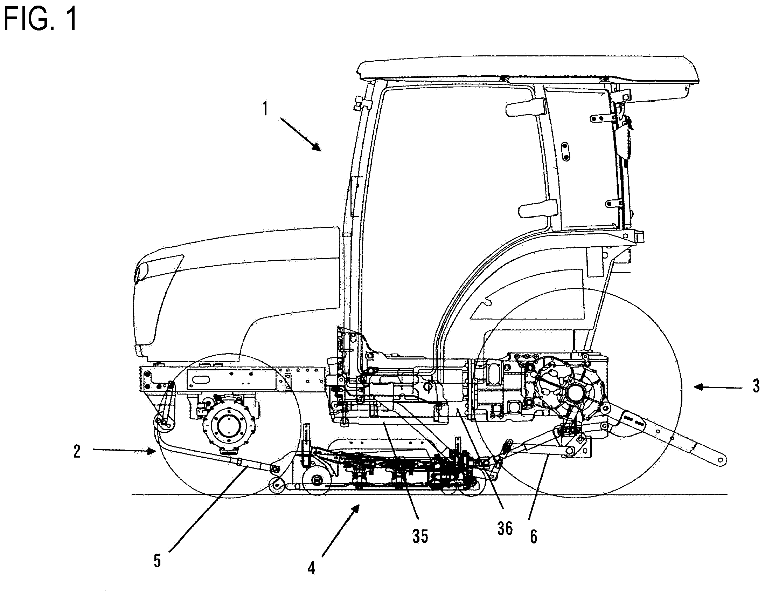

[Fig. 1] Fig. 1 is a diagram illustrating a state where a mowing device is mounted on a travelling vehicle in the side view.

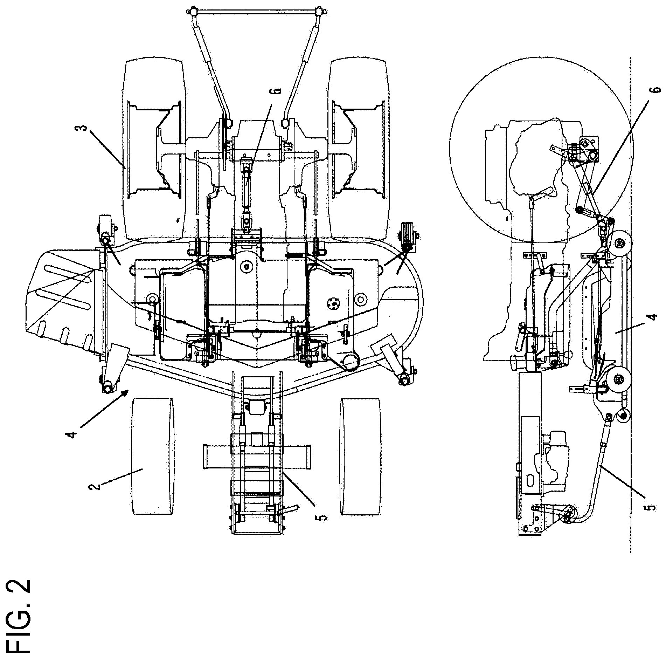

[Fig. 2] Fig. 2 is a diagram illustrating a state where the mowing device is mounted on the travelling vehicle in the top and side views.

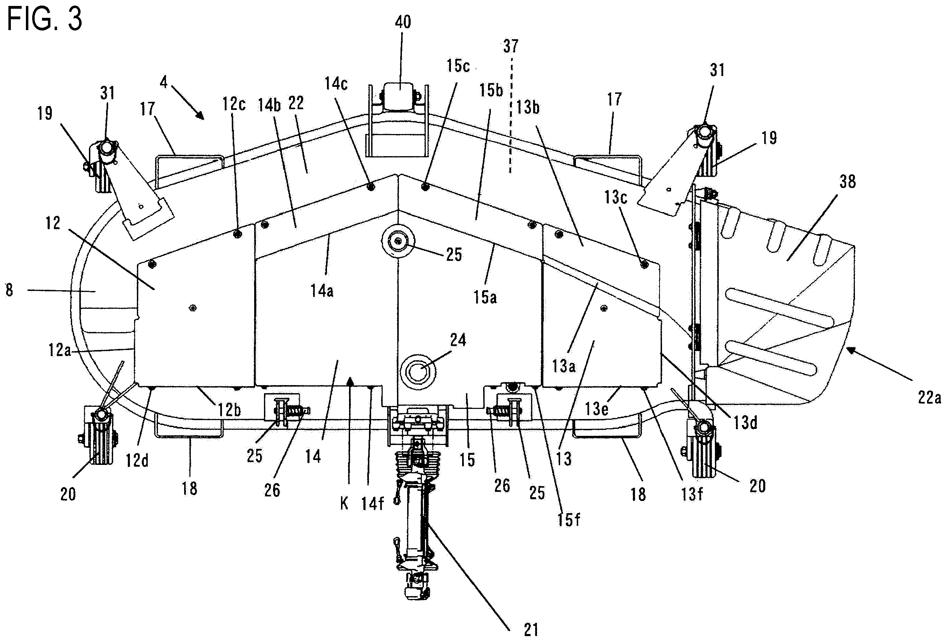

[Fig. 3] Fig. 3 is a top view of the mowing device.

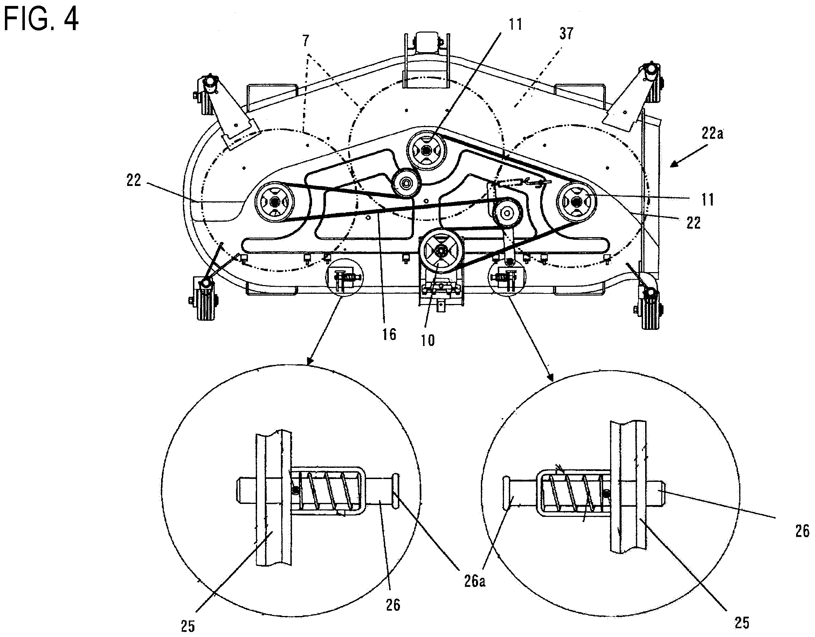

[Fig. 4] Fig. 4 is a diagram illustrating the mowing device from which a cover body is detached in the top view.

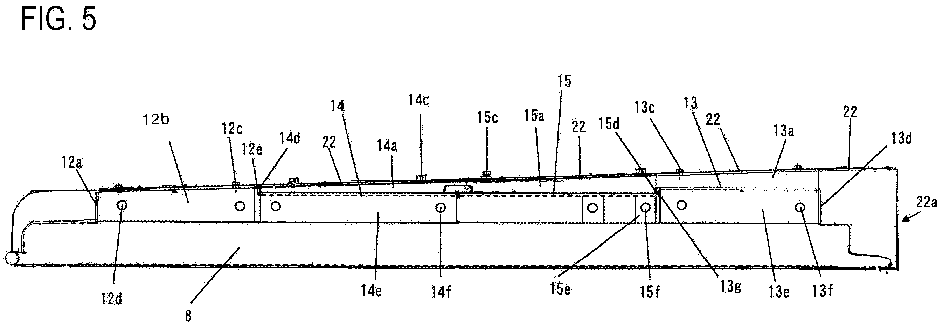

[Fig. 5] Fig. 5 is a diagram illustrating the shape of a mower deck in the rear view.

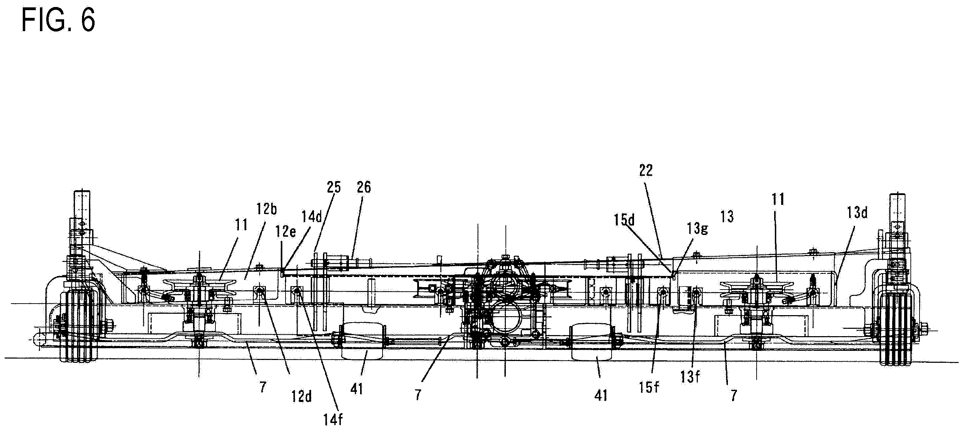

[Fig. 6] Fig. 6 is a diagram illustrating the inside of the mowing device in the rear view.
[Fig. 7] Fig. 7 is a diagram illustrating a state where the reaping height of the mowing device is adjusted in the side view.

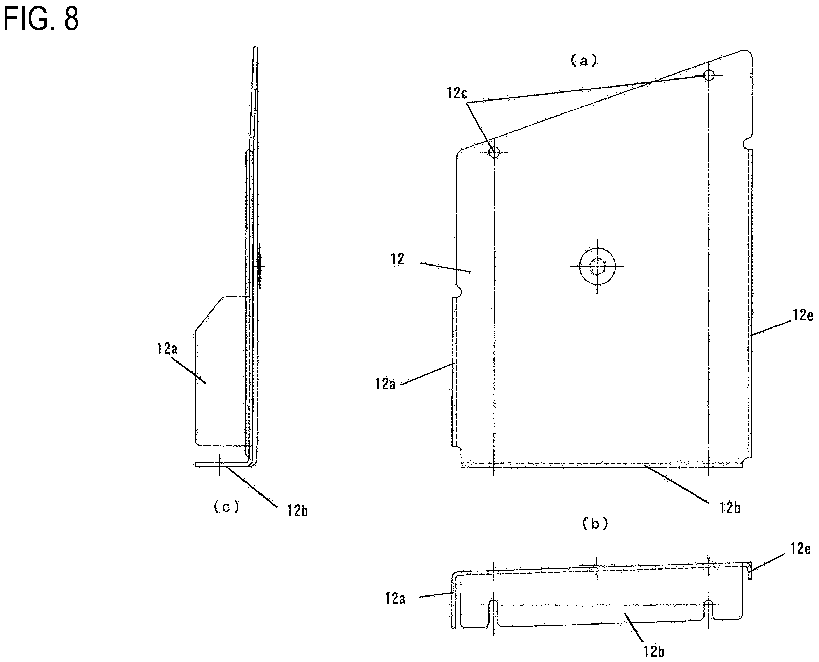

[Fig. 8] Fig. 8 is a diagram illustrating a left cover body.

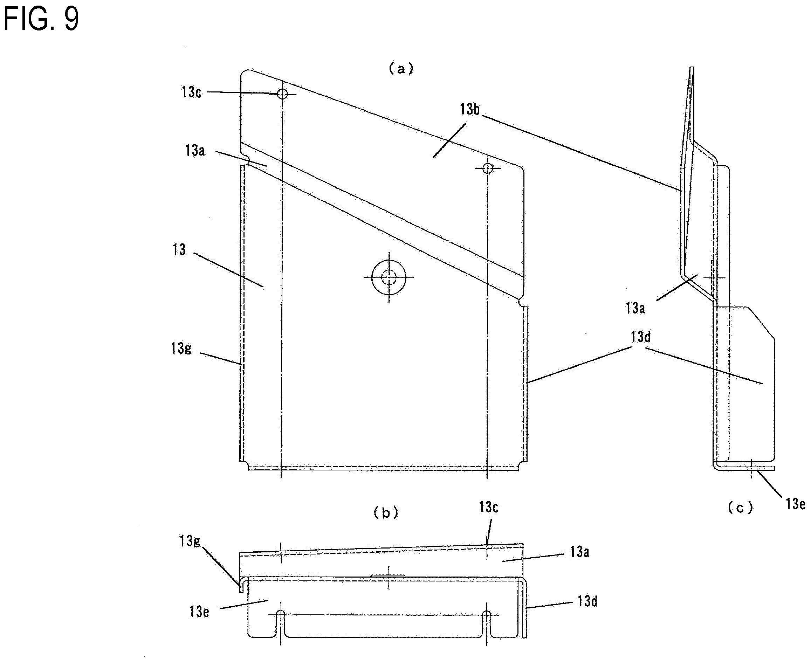

[Fig. 9] Fig. 9 is a diagram illustrating a right cover body.

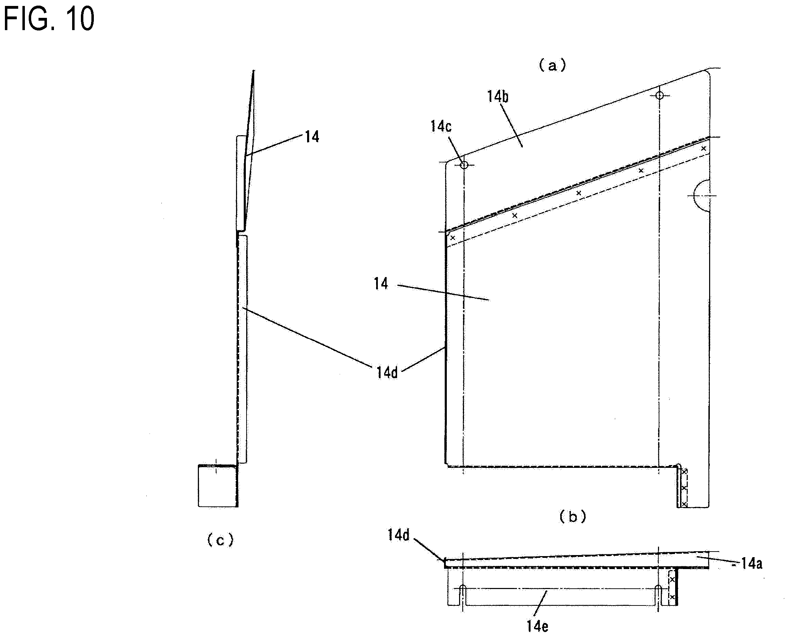

[Fig. 10] Fig. 10 is a diagram illustrating a left center cover body.

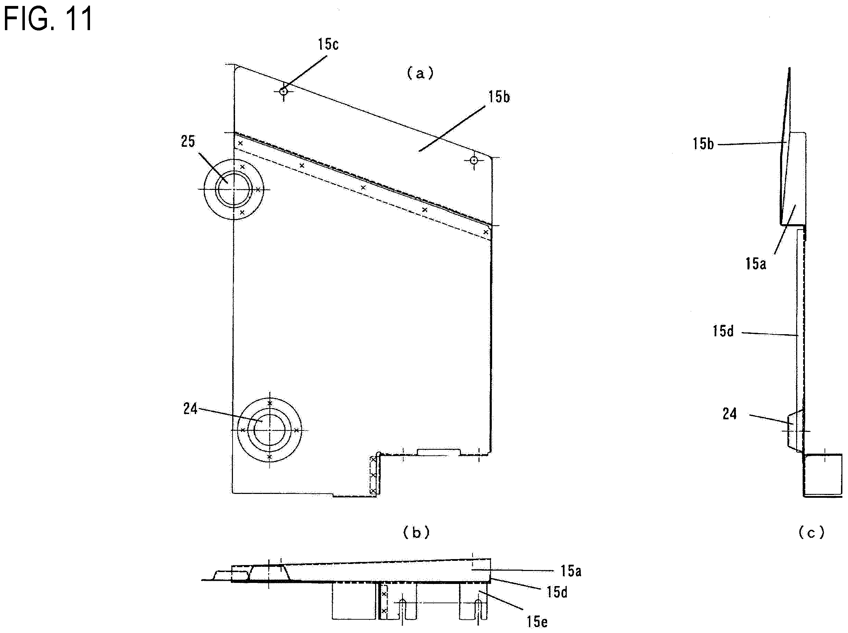

[Fig. 12] Fig. 11 is a diagram illustrating a right center cover body.

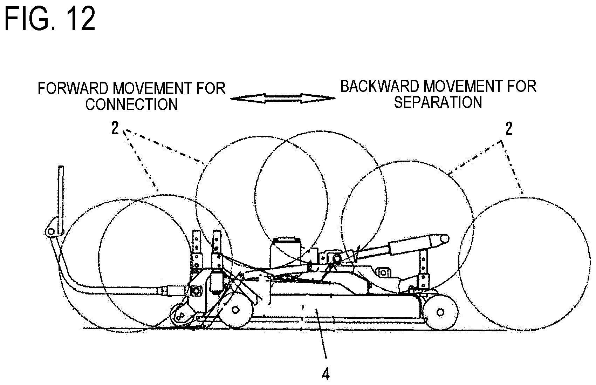

[Fig. 12] Fig. 12 is a diagram illustrating a state where the travelling vehicle climbs over the mowing device.

### [Mode for Carrying Out the Invention]

A mode for carrying out the invention will be described in detail with reference to the drawings.

In the embodiment, the travelling direction of a travelling vehicle 1 will be referred to as the front to back direction, and the direction interesting the travelling direction will be referred to as the left and right direction.

A mowing device 4 is provided between front and rear wheels 2 and 3 of the travelling vehicle 1. A front connection link 5 at the front side of the mowing device 4 extends forward so as to be connected to the front portion of the travelling vehicle 1. Further, a rear connection link 6 at the rear side thereof extends backward so as to be connected to the rear portion of the travelling vehicle 1.

The mowing device 4 has a configuration in which a plurality of blades 7 is provided in parallel in the left and right direction and the upside of the blades 7 is covered by a mower deck 8.

The upper surface of the mower deck 8 is provided with a transmission mechanism 9 that rotationally drives the blades 7.

Regarding the blades 7 of the embodiment, three blades are provided in parallel in the left and right direction, a mown grass eject passage 37 is provided at the front side of the blades 7 so as to extend in the left and right direction, and the upside of the mown grass eject passage 37 is covered by an eject guide body 22. The eject guide body 22 is used to form a part of the front portion of the mower deck 8, and the right end thereof is provided with a mown grass eject port 22a that ejects mown grass. A mown grass guide plate 38 is attached so as to prevent the mown grass ejected outward from the mown grass eject port 22a from flying upwardly.

The riding type mowing machine of the embodiment is a so-called side eject type lawn mower that ejects the grass mown by the plurality of blades 7 toward one side of the mower deck 8 in the left and right direction.

The transmission mechanism 9 is provided with a main pulley 10 that is rotated by power transmitted from the travelling vehicle 1 through a transmission shaft 21, a transmission pulley 11 that transmits power to the blades 7, and a transmission belt 16 that transmits power from the main pulley 10 to the transmission pulleys 11.

A cover body K that covers the transmission mechanism 9 is provided above the transmission mechanism 9.

The cover body K includes a left cover body 12 that covers the left side portion of the transmission mechanism 9, a right cover body 13 that covers the right side portion of the transmission mechanism 9, and center cover bodies 14 and 15 that cover the left and right center portions of the transmission mechanism 9. The center cover bodies 14 and 15 are divided in the left and right direction into the left center cover body 14 and the right center cover body 15.

A front gauge wheel 19 is provided at each of both left and right sides of the front portion of the mower deck 8, and a rear gauge wheel 20 is provided at each of both left and right sides of the rear portion of the mower deck 8. The front surface portion of the mower deck 8 is provided with a pair of left and right front frame bodies 17 catching the front wheels 2 when the front wheels 2 climb over the mower deck in the backward movement state during the attachment or detachment of the mowing device 4 to be described later, and the rear surface portion of the mower deck 8 is provided with a pair of left and right rear frame bodies 18 catching the front wheels 2 when the front wheels 2 climb over the mower deck in the forward movement state during the attachment or detachment of the mowing device.

The attachment or detachment of the mowing device 4 will be described.

When the mowing device 4 is separated from the travelling vehicle 1, the front connection link 5 and the rear connection link 6 are respectively separated from the travelling vehicle 1. Then, an operator drives the travelling vehicle 1 backward. Subsequently, the front wheels 2 are caught by the front frame bodies 17, pass along the upper surfaces of the left cover body 12 and the right cover body 13, and pass along the rear frame body 18 so that the front wheels 2 move to the rear side of the mowing device 4. When the mowing device 4 is attached to the travelling vehicle 1, the operator moves the travelling vehicle 1 forward. Subsequently, the front wheels 2 are caught by the rear frame bodies 18, pass along the upper surfaces of the left cover body 12 and the right cover body 13, and pass along the front frame body 17 so that the front wheels 2 move to the rear side of the mowing device 4. Accordingly, the mowing device 4 is located between the front and rear wheels 2 and 3, and the front connection link 5 and the rear connection link 6 are respectively connected to the travelling vehicle 1.

The mown grass eject passage 37 is formed so that the opening area gradually increases toward the mown grass eject port 22a, and the eject guide body 22 covering the upside of the mown grass eject passage 37 is formed so as to be slanted upwardly toward the mown grass eject port 22a.

Since the cover body K is formed by a steel plate and the left cover body 12 and the right cover body 13 are formed so as to be thicker than the center cover bodies 14 and 15, the left cover body 12 and the right cover body 13 have higher rigidity than the center cover bodies 14 and 15. Accordingly, it is possible to ensure the strength necessary when the front wheels 2 climb over the cover body. Further, since the center cover bodies 14 and 15 are thinned, the cover body can be decreased in weight and hence can be easily attached or detached.

The left cover body 12 has a configuration in which the upper surface thereof is formed in a flat surface shape and the left end portion 12a and the rear end portion 12b are bent downwardly so as to cover the left side and the rear side of the transmission mechanism 9. The front end portion is provided with a front attachment portion 12c to be attached to the upper surface of the eject guide body 22 by a bolt and a nut, and the rear end portion 12b is provided with a rear attachment portion 12d to be attached to the mower deck 8 by a bolt and a nut. A right end portion 12e of the left cover body 12 is bent downwardly.

In the right cover body 13, the upper surfaces of the center portion and the rear portion are formed as flat surfaces, the front portion is formed as a curved portion 13a curved upwardly, and a front end portion 13b is formed as a flat surface in the forward direction from the curved portion 13a. The front end portion 13b is provided with a front attachment portion 13c to be attached to the upper surface of the eject guide body 22 by a bolt and a nut. That is, since the eject guide body 22 at the front side of the right cover body 13 is a portion near the mown grass eject port 22a of the eject guide body 22 and is slanted rightward and upwardly, the front end portion 13b of the right cover body 13 is formed in a posture along the shape of the eject guide body 22, and is detachably attached to the upper surface of the eject guide body 22 in a contact state. That is, the curved portion 13a of the right cover body 13 is also inclined rightward and upwardly as illustrated in the drawing. The left end portion 13d and the rear end portion 13e of the right cover body 13 are respectively pressed and bent downwardly so as to cover the right side and the rear side of the transmission mechanism 9. The rear end portion 13e is provided with a rear attachment portion 13f to be detachably attached to the mower deck 8.

The center cover bodies 14 and 15 are divided into the left center cover body 14 and the right center cover body 15.

Reference Numeral 24 indicates a cup-shaped main pulley cover that covers the protrusion portion of the main pulley 10, and Reference Numeral 25 indicates a transmission pulley cover that covers the protrusion portion of the transmission pulley 11. Here, both covers are attached to the right center cover body 15.

Similarly to the right cover body 13, the left center cover body 14 and the right center cover body 15 are also provided with front end portions 14b and 15b respectively having curved portions 14a and 15a and front attachment portions 14c and 15c, formed in a posture along the shape of the eject guide body 22 slanted rightward and upwardly, and detachably attached to the eject guide body 22.

Since a left end portion 14d of the left center cover body 14 is bent upwardly so as to contact the right end portion 12e of the left cover body 12, the mown grass hardly intrudes into the transmission mechanism 9.

Since a right end portion 15d of the right center cover body 15 is bent upwardly so as to contact the left end portion 13g of the right cover body 13, the mown grass hardly intrudes into the transmission mechanism 9.

That is, since the left and right outer end portions of the center cover bodies 14 and 15 are bent upwardly and the left and right inner end portions of the left cover body 12 and the right cover body 13 are bent downwardly, these end portions can come easily into close contact with each other, and hence the mown grass hardly intrude thereinto.

Rear end portions 14e and 15e of the left center cover body 14 and the right center cover body 15 are bent downwardly so as to respectively form attachment portions 14f and 15f.

The rear end portion of the mower deck 8 is provided with a pair of left and right integrated connection bodies 25 connected to the rear connection link 6 and connection pins 26 respectively connecting the connection bodies 25 to the rear connection link. Each connection body 25 is formed so as to protrude upwardly from the upper surface of the mower deck 8, and each connection pin 26 is inserted thereinto. The connection body 25 is provided at each of the rear side of the left end portion of the left center cover body 14 and the rear side of the right end portion of the right center cover body 15. Accordingly, when the travelling vehicle 1 is moved forward so that the front wheel 2 climbs over the mowing device 4 in order to connect the mowing device 4 to the travelling vehicle 1, the operator driving the travelling vehicle 1 can easily allow the left and right front wheels 2 to climb over the upper surfaces of the left cover body 12 and the right cover body 13 respectively by driving the travelling vehicle while seeing the connection bodies 25 as pointers. The connection pin 26 includes a gripping portion 26a provided at the inside in the left and right direction. Accordingly, it is possible to prevent a problem in which the front wheels contact the gripping portion 26a or the mud of the front wheels is stuck to the gripping portion 26a when the front wheels 2 climb over the mower deck 8. Further, since there is no need for separately providing the right cover body or the left cover body with a partition wall as disclosed in the related art, cost of the mowing device can be reduced.

Next, the adjustment of the reaping height of the mowing device 4 will be described.

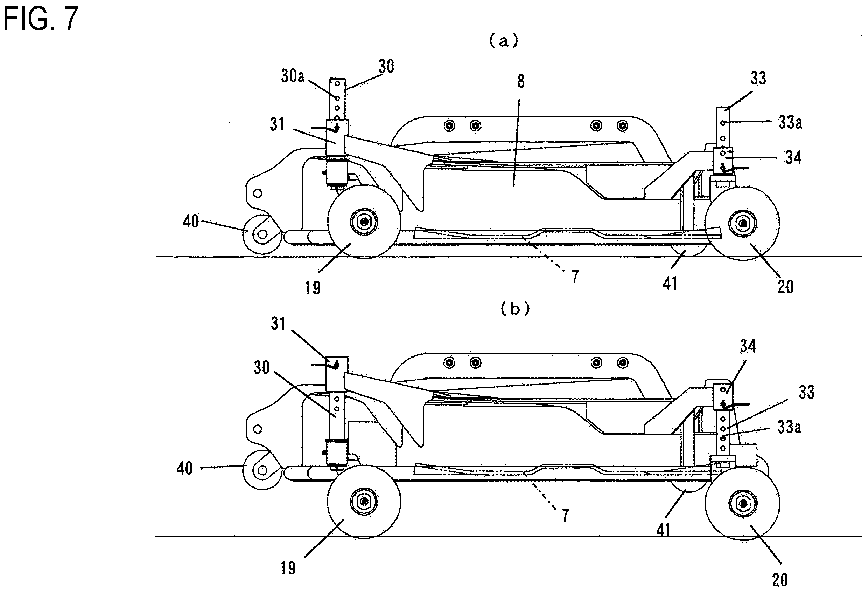

The front gauge wheel 19 and the rear gauge wheel 20 are respectively supported by support shafts 30. Each support shaft 30 is inserted into a support receiving boss 31, and the support shaft 30 is slidable in the up and down direction inside the support receiving boss 31. The support shaft 30 is provided with a plurality of reaping height adjustment holes 30a, and the height position of the pin support shaft 30 is set when a reaping height adjustment pin 32 is inserted thereinto. Fig. 7(a) illustrates a posture in which the mower deck 8 is located at the lowest position and Fig. 7(b) illustrates a posture in which the mower deck 8 is located at the highest position. When the mower deck 8 is located at the lowest position, the lower end portion of the mower deck 8 is separated from a ground surface by a predetermined distance. When the working vehicle climbs over the mowing device 4, the mower deck is adjusted to the lowest position. Particularly when the mowing device 4 is connected to the travelling vehicle 1, the travelling vehicle 1 and the mowing device 4 are connected to each other by the front connection link 5 and the rear connection link 6 after the front wheels 2 climb over the mowing device. Here, when the positional relation between the travelling vehicle 1 and the mowing device 4 needs to be finely adjusted, the operator can easily adjust the positional relation while moving the mowing device 4 to a deviated position and finely adjusting the deviated position. Further, since the height position of the mower deck 8 is set as low as possible, the load applied to the support shaft 30, the mower deck 8, or the front gauge wheel 19 and the rear gauge wheel 20 can be decreased. In addition, roller wheels 40 and 41 respectively provided at the front and rear sides of the left and right center portions of the mower deck 8 are used so that the lower end portion of the mower deck 8 does not easily contact a paved surface.

The upper surfaces of the left center cover body 14 and the right center cover body 15 are formed as flat surfaces so as to be horizontal or substantially horizontal. Then, the height position is set to be slightly lower than the upper surface positions of the left cover body 12 and the right cover body 13. With this configuration, it is possible that the mower deck hardly contacts the lower surface of the fuel tank 35 or the mission casing 36 provided in the lower portion of the travelling vehicle 1 when the reaping height of the mower deck 8 is increased to the above-described highest position. Further, since the left cover body 12, the left center cover body 14, the right center cover body 15, and the right cover body 13 are substantially and continuously flat, the mower deck 8 has a satisfactory appearance as a whole.

### [Description of Reference Numerals and Signs]

- 2:: front wheel
- 3:: rear wheel
- 4:: mowing device
- 7:: blade
- 8:: mower deck
- 9:: transmission mechanism
- 12:: left cover body
- 13:: right cover body
- 14:: left center cover body
- 15:: right center cover body
- K:: cover body
- 22:: eject guide body
- 37:: mown grass eject passage

## Claims

1. A riding type mowing machine comprising:
a mowing device (4) that includes a plurality of blades (7) mowing grass, a mower deck (8) covering the blades (7), and a transmission mechanism rotating the blades (7),
the mowing device (4) being provided between a front wheel (2) and a rear wheel (3) of a travelling vehicle (1),
the transmission mechanism being provided above the mower deck (8),
a left cover body (12) covering the left side portion of the transmission mechanism and a right cover body (13) covering the right side portion of the transmission mechanism being provided,
a front portion of the mower deck (8) being provided with an eject guide body (22) forming an upper portion of an eject passage (37) from which grass mown by the blades (7) is ejected rightwardly,
the eject guide body (22) being formed in a posture inclined rightward and upwardly,
an upper surface of a rear portion of the left cover body (12) being formed as a flat surface with a left end portion (12a) and a rear end portion (12b) to be respectively bent downwardly,
an upper surface of a rear portion of the right cover body (13) being formed as a flat surface with a right end portion (13d) and a rear end portion (13e) to be respectively bent downwardly, and
wherein a front portion of the left cover body (12) and a front portion of the right cover body (13) are detachably attached to the eject guide body (22) in a posture along an upper surface thereof; **characterized in that**
a center cover body (14, 15) covering a center portion of the transmission mechanism is provided between the left cover body (12) and the right cover body (13), and
wherein a rear portion of the center cover body (14, 15) is formed as a flat surface while a front portion thereof is detachably attached to the eject guide body (22) in a posture along the upper surface thereof,
the left cover body (12) and the right cover body (13) are formed so as to be thicker than the center cover body (14, 15), and
wherein the center cover body (14, 15) is in close contact with the left cover body (12) and the right cover body (13).

2. The riding type mowing machine according to claim 1,
wherein the height of an upper surface of the rear portion of the center cover body (14, 15) is set to be lower than the height of the upper surfaces of the rear portions of the left cover body (12) and the right cover body (13).

## Patentansprüche

1. Aufsitzmähmaschine, mit:
einer Mähvorrichtung (4), die eine Vielzahl von Schneiden (7), die Gras mähen, ein Mähverdeck (8), das die Schneiden (7) abdeckt, sowie einen Getriebemechanismus umfasst, der die Schneiden (7) dreht,
wobei die Mähvorrichtung (4) zwischen einem Vorderrad (2) und einem Hinterrad (3) eines Reisefahrzeugs (1) vorgesehen ist,
der Getriebemechanismus über dem Mähverdeck (8) vorgesehen ist,
ein linker Abdeckkörper (12), der den linken Seitenabschnitt des Getriebemechanismus abdeckt, und ein rechter Abdeckkörper (13) vorgesehen sind, der den rechten Seitenabschnitt des Getriebemechanismus abdeckt,
ein vorderer Abschnitt des Mähverdecks (8) mit einem Auswurfführungskörper (22) versehen ist, der einen oberen Abschnitt eines Auswurfdurchlasses (37) ausbildet, aus dem durch die Schneiden (7) gemähtes Gras nach rechts ausgeworfen wird,
der Auswurfführungskörper (22) in einer Lage ausgebildet ist, die nach rechts und nach oben geneigt ist,
eine obere Fläche eines hinteren Abschnitts des linken Abdeckkörpers (12) als eine ebene Fläche mit einem linken Endabschnitt (12a) und einem hinteren Endabschnitt (12b) ausgebildet ist, die jeweils nach unten gebogen sind,
eine obere Fläche eines hinteren Abschnitts des rechten Abdeckkörpers (13) als eine ebene Fläche mit einem rechten Endabschnitt (13d) und einem hinteren Endabschnitt (13e) ausgebildet ist, die jeweils nach unten gebogen sind, und
wobei ein vorderer Abschnitt des linken Abdeckkörpers (12) und ein vorderer Abschnitt des rechten Abdeckkörpers (13) an dem Auswurfführungskörper (22) in einer Lage entlang seiner oberen Fläche abnehmbar befestigt sind; **dadurch gekennzeichnet, dass**
ein mittlerer Abdeckkörper (14, 15), der einen mittleren Abschnitt des Getriebemechanismus abdeckt, zwischen dem linken Abdeckkörper (12) und dem rechten Abdeckkörper (13) vorgesehen ist, und
wobei ein hinterer Abschnitt des mittleren Abdeckkörpers (14, 15) als eine ebene Fläche ausgebildet ist, wobei sein vorderer Abschnitt an dem Auswurfführungskörper (22) in einer Lage entlang seiner oberen Fläche abnehmbar befestigt ist,
der linke Abdeckkörper (12) und der rechte Abdeckkörper (13) ausgebildet sind, um dicker zu sein als der mittlere Abdeckkörper (14, 15), und
wobei der mittlere Abdeckkörper (14, 15) in engem Kontakt mit dem linken Abdeckkörper (12) und dem rechten Abdeckkörper (13) ist.

2. Aufsitzmähmaschine nach Anspruch 1,
wobei die Höhe einer oberen Fläche des hinteren Abschnitts des mittleren Abdeckkörpers (14, 15) festgelegt ist, um niedriger zu sein als die Höhe der oberen Flächen der hinteren Abschnitte des linken Abdeckkörpers (12) und des rechten Abdeckkörpers (13).

## Revendications

1. Tondeuse de type à selle comprenant :
un dispositif de tonte (4) qui comprend une pluralité de lames (7) tondant l'herbe, un pont de tondeuse (8) recouvrant les lames (7) et un mécanisme de transmission faisant tourner les lames (7),
le dispositif de tonte (4) étant prévu entre une roue avant (2) et une roue arrière (3) d'un véhicule mobile (1),
le mécanisme de transmission étant prévu au-dessus du pont de tondeuse (8),
un corps de couvercle gauche (12) recouvrant la partie latérale gauche du mécanisme de transmission et un corps de couvercle droit (13) recouvrant la partie latérale droite du mécanisme de transmission, étant prévus,
une partie avant du pont de tondeuse (8) étant prévue avec un corps de guidage d'éjection (22) formant une partie supérieure d'un passage d'éjection (37) à partir duquel l'herbe tondue par les lames (7) est éjectée vers la droite,
le corps de guidage d'éjection (22) étant formé dans une position inclinée vers la droite et vers le haut,
une surface supérieure d'une partie arrière du corps de couvercle gauche (12) étant formée comme une surface plate avec une partie d'extrémité gauche (12a) et une partie d'extrémité arrière (12b) destinées à être respectivement pliées vers le bas,
une surface supérieure d'une partie arrière du corps de couvercle droit (13) étant formée comme une surface plate avec une partie d'extrémité droite (13d) et une partie d'extrémité arrière (13e) destinées à être respectivement pliées vers le bas, et
dans laquelle une partie avant du corps de couvercle gauche (12) et une partie avant du corps de couvercle droit (13) étant fixées, de manière détachable, au corps de guidage d'éjection (22) dans une posture le long de sa surface supérieure ; **caractérisée en ce que** :
un corps de couvercle central (14, 15) recouvrant une partie centrale du mécanisme de transmission, est prévu entre le corps de couvercle gauche (12) et le corps de couvercle droit (13), et
dans lequel une partie arrière du corps de couvercle central (14, 15) est formée comme une surface plate alors que sa partie avant est fixée, de manière détachable, au corps de guidage d'éjection (22) dans une posture le long de sa surface supérieure,
le corps de couvercle gauche (12) et le corps de couvercle droit (13) sont formés afin d'être plus épais que le corps de couvercle central (14, 15), et
dans laquelle le corps de couvercle central (14, 15) est en contact immédiat avec le corps de couvercle gauche (12) et le corps de couvercle droit (13).

2. Tondeuse de type à selle selon la revendication 1,
dans laquelle la hauteur d'une surface supérieure de la partie arrière du corps de couvercle central (14, 15) est réglée pour être inférieure à la hauteur des surfaces supérieures des parties arrière du corps de couvercle gauche (12) et du corps de couvercle droit (13).
